# EUROPÄISCHE PATENTSCHRIFT

(11) **EP 1 681 496 B1**
(45) Veröffentlichungstag und Bekanntmachung des Hinweises auf die Patenterteilung: **05.10.2011**
(21) Anmeldenummer: 05026334.2
(22) Anmeldetag: 02.12.2005
(51) Int. Cl.: F16H 59/16, F16D 48/06, F16H 61/12

(54) **Verfahren zum Betreiben einer automatisch betätigbaren Reibungskupplung und/oder eines Getriebes**
Method for controlling of an automatic friction clutch and/or a transmission
Méthode de commande d'un embrayage à friction automatisé et/ou d'une transmission

(30) Priorität: 13.01.2005 DE 102005001523
(43) Veröffentlichungstag der Anmeldung: 19.07.2006
(73) Patentinhaber: ZF Friedrichshafen AG, 88038 Friedrichshafen (DE)
(72) Erfinder: Petzold, Rainer, 88045 Friedrichshafen (DE); Jäger, Thomas, 88074 Meckenbeuren (DE); Wolfgang, Werner, 88213 Ravensburg (DE); Steinborn, Mario, 88046 Friedrichshafen (DE); Kramer, Rupert, 88048 Friedrichshafen (DE); Bitzer, Franz, Dr., 88048 Friedrichshafen (DE)

(56) Entgegenhaltungen:
- EP-A- 1 150 041
- EP-A- 1 225 362
- WO-A-2004/005744
- DE-A1- 10 120 662
- DE-A1- 19 810 033
- DE-C1- 19 639 291

## Beschreibung

Die Erfindung betrifft ein Verfahren zum Betreiben einer automatisch betätigbaren Reibungskupplung und/oder eines Getriebes in einem Kraftfahrzeugantriebsstrang, bei dem der Eingangswelle des Getriebes ein Drehmomentsensor zugeordnet ist.

Bekanntermaßen wird für viele Steuerungs- und Regelungsfunktionen in einem Kraftfahrzeug der Wert des aktuellen Motordrehmomentes benötigt. Dieser aktuelle Motordrehmomentwert wird herkömmlich im Motorsteuerungsgerät auf der Grundlage von fahrzeugspezifischen sowie fahrsituationsaktuellen Werten berechnet und beispielsweise über elektronische Schnittstellen (CAN-Bus) anderen Steuerungsgeräten des Fahrzeugs zur Verfügung gestellt. Zu diesen Steuergeräten gehört auch ein Getriebesteuergerät, welches auf der Grundlage von abgespeicherten Steuerungs- und/oder Regelungsprogrammen Aktuatoren in einem Automatgetriebe ansteuert, mit denen die Betätigung einer Schalt- und Anfahrkupplung und/oder Stellglieder im Automatgetriebe zur Durchführung von Übersetzungsänderungsvorgängen ansteuerbar sind.

Der von dem Motorsteuergerät üblicherweise aus der Motordrehzahl, der Kraftstoffeinspritzmenge und anderer Parameter berechnete Motordrehmomentwert ist zumindest für die Steuerung und Regelung eines Automatgetriebes zu ungenau. So kann der berechnete Motordrehmomentwert von dem tatsächlichen Motordrehmomentwert aufgrund von Einflüssen, beispielsweise durch einen motorseitigen Nebenaggregateantrieb, wegen Lüfterverlusten, wegen dynamischer Effekte, wegen unterschiedlicher Ladedrücke der Brennkraftmaschine und/oder wegen unterschiedlicher Umgebungsluftdrücke mehr oder minder stark abweichen. Zu den dynamischen Effekten gehören Drehmomentsteigerungen, wenn beispielsweise aufgrund von einem erhöhten Fahrwiderstand die Motordrehzahl abnimmt und alle drehenden Teile des Antriebsstranges mit ihren nachlaufenden Drehmassen drehmomenterhöhend wirken, oder Drehmomentverringerungen, wenn bei steigender Motordrehzahl die trägen Drehmassen des Antriebsstranges im Sinne eines Aufzugseffektes erst auf diejenige Drehzahl gebracht werden, die schon der Antriebsmotor selbst aufweist.

Im Zusammenhang mit der genannten Ungenauigkeit des berechneten Motormomentwertes wird auf die DE 102 57 139 A1 hingewiesen. In dieser Druckschrift wird eingangs erläutert, dass bei Automatgetrieben in Kraftfahrzeugen zum Steuern des genauen Hoch- bzw. Runterschaltens das Getriebeeingangsdrehmoment, der Wert der Drosselklappenöffnung an der Brennkraftmaschine sowie die Fahrzeuggeschwindigkeit als Eingangsgrößen genutzt werden. Dabei werden insbesondere bei elektronisch gesteuerten Getrieben die Getriebeeingangsdrehmomente auf der Grundlage der Motordrehzahl geschätzt. Diese Schätzungen seien ungenau, so dass üblicherweise Drehmomentsensoren an der Getriebeeingangswelle zur genauen Erfassung des Getriebeeingangsdrehmoments genutzt werden.

So ist aus der DE 44 40 706 C2 ein Verfahren und eine Vorrichtung zur streckenneigungsabhängigen Steuerung des Schaltpunktes eines Automatgetriebes bekannt. Die Berechnung der auf das Kraftfahrzeug einwirkenden Steigungskraft, die bekanntlich ein Bestandteil des insgesamt auf das Fahrzeug wirkenden Fahrwiderstandes ist, erfolgt auf der Grundlage von Sensordaten unter anderem über die Fahrzeugmasse, die Fahrzeuggeschwindigkeit und den Luftdruck. Das von dem Fahrzeugantriebsmotor abgegebene aktuelle Motordrehmoment wird entweder aus einem abgespeicherten Kennfeld ausgelesen oder mittels eines gesonderten Drehmomentsensors gemessen.

Außerdem ist aus der DE 195 13 695 A1 eine Regelungsvorrichtung für die Überbrückungskupplung des Drehmomentwandlers eines Automatgetriebes bekannt. Zur Erhöhung der Lebensdauer der Überbrückungskupplung und des Wandleröls sowie zur Verringerung der thermischen Verlustleistung der Überbrückungskupplung ist die Kupplungsregelvorrichtung mit Mitteln zur Bestimmung von Solischlupfwerten ausgestattet, mit denen im Dauerschlupfbetrieb der Überbrückungskupplung die Schlupfdrehzahl in Abhängigkeit von der Drehzahl des Eingangselementes der Kupplung, dem Motordrehmoment und der Fahrpedalaktivität einstellbar ist.

Zudem ist es bei dieser Regelungsvorrichtung vorgesehen, dass an der Kurbelwelle des Fahrzeugantriebsmotors bzw. an der Pumpenseite des Drehmomentwandlers, und nicht etwa an der Getriebeeingangswelle, ein Drehmomentsensor das dort anliegende Drehmoment misst und der Regelungsvorrichtung zur Verfügung stellt. Außerdem ist in dieser Druckschrift offenbart, dass mit der Regelungsvorrichtung eine Notfallbetriebsart für die Wandlerüberbrückungskupplung möglich ist. Während dieses Notfallbetriebs wird der Sollschlupfwert auf einen Minimalwert gesetzt, wenn durch eine Störung der Wandlerüberbrückungskupplung oder des Drehmomentwandlers die Wandleröltemperatur einen unzulässig hohen Wert überschritten hat.

WO 2004/005744 offenbart ein Verfahren nach dem Oberbegriff des Anspruchs 1.

Weiter ist es bekannt, dass bei automatisiert zu schaltenden Fahrzeugkupplungen für eine Optimierung der Kupplunosfunktionen die Kenntnis darüber notwendig ist, bei welchem Kupplungsstellweg eines Kupplungsaktuators welches Drehmoment von der Eingangsseite der Kupplung zu deren Ausgangsseite übertragbar ist. Diese Dretimomentübertragbarkeit der Kupplung ist eine kupplungsindividuelle Funktion, die auch Kupplungskennlinie genannt wird.

Diese Kupplungskennlinie wird üblicherweise in einem Selbstlemvorgang von einem diesbezüglichen Kupplungs- oder Getriebesteuergerät erlernt und in einem Kennfeld abgespeichert, so dass jedem Kupplungsstellweg ein berechneter Getriebeeingangsdrehmomentwert zugeordnet ist. Zum Erlernen der Kupplungskennlinie wird am Antriebsmotor ein Motordrehmoment eingestellt und anschließend der Kupplungsaktuator betätigt. In Abhängigkeit von dem Aktuatorstellweg wird die Kupplung von einer Geöffnet-Stellung in eine Geschlossen-Stellung überführt. Dabei wird zunächst kein Drehmoment und mit zunehmenden Stellweg immer höhere Drehmomente über die Kupplung übertragen. Der Anteil des über die Kupplung geleiteten Drehmomentes wird durch einen Vergleich der Motordrehzahl mit der Getriebeeingangsdrehzahl bestimmt. Sobald bei einem vorgegebenen berechneten Motordrehmoment die beiden genannten Drehzahlen identisch sind, kann davon ausgegangen werden, dass das an der Kupplungseingengsseite (Kurbelwelle) anliegende Drehmoment auch an die Kupplungsausgangsseite (Getriebeeingangswelle) schlupffrei übertragen wurde.

Da wie oben geschildert die Berechnung des Motordrehmoments fehlerbehaftet ist, bildet sich dieser Fehler auch bei der Bestimmung der Kupplungskennlinie ab, wobei dieser Fehler situationsbedingt unterschiedlich groß sein kann.

Vor diesem Hintergrund liegt der Erfindung die Aufgabe zugrunde, ein Verfahren zum Betreiben einer automatisch betätigbaren Reibungskupplung und/oder eines Getriebes in einem Kraftfahrzeugantriebsstrang vorzustellen, mit dem die Kupplungskennlinie genauer als bisher von einem diesbezüglichen Steuergerät erlernbar ist. Zudem soll die Möglichkeit geschaffen werden, für einen Fahrer komfortabler und verschleißreduzierter als bisher die Kupplungsbetätigung durchzuführen. Schließlich soll es möglich sein, die auf die Kupplung und auf das Getriebe im Antriebsstrang einwirkenden mechanischen Lasten genauer als bisher üblich zu bestimmen und für Diagnosezwecke bereit zu halten.

Die Lösung dieser Aufgaben ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich bei einem Getriebe mit einer automatisierten Kupplung der Schaltkomfort sowie die Kupplungslebensdauer deutlich verbessern bzw. verlängern lässt, wenn für die Bestimmung der Kupplungskennlinie nicht mehr wie bisher auf berechnete Motordrehmomentwerte zurückgegriffen wird, sondern anstelle dessen das an der Getriebeeingangswelle mittels eines Drehmomentsensors gemessene Drehmoment genutzt wird.

Demnach geht die Erfindung aus von einem Verfahren zum Betreiben einer automatisch betätigbaren Reibungskupplung und/oder eines Getriebes in einem Kraftfahrzeugantriebsstrang, bei dem der Eingangswelle des Getriebes ein Drehmomentsensor zugeordnet ist. Zur Lösung der gestellten Aufgabe ist vorgesehen, dass zur Bestimmung von Belastungseigenschaften der Reibungskupplung und/oder des Getriebes der Verlauf des gemessenen Getriebeeingangsdrehmomentes ermittelt und ausgewertet wird.

Die Erfindung ist dazu vorgesehen, dass das Kupplungsübertragungsdrehmoment in Abhängigkeit vom Betätigungsweg der Kupplung, also in Abhängigkeit von der Kupplungskennlinie, aus dem Verlauf des gemessenen Getriebeeingangsdrehmoments während eines Betätigungsvorgangs der Kupplung bestimmt wird. Dabei wird selbstverständlich auch der Kupplungsstellweg erfasst und zur Kupplungskennlinienbestimmung herangezogen. Hierzu wird weiter unter genaueres ausgeführt.

Gemäß einer Variante der Erfindung kann vorgesehen sein, dass die Kupplungskennlinie während der Betätigung der Kupplung durch einen Vergleich des an der Eingangsseite der Kupplung sowie an der Getriebeeingangswelle bestimmten Drehmomentes ermittelt wird. Für die Durchführung des Verfahrens sind dann allerdings zwei Drehmomentsensoren notwendig.

Die Erfindung ist dazu vorgesehen, dass zur Bestimmung der Kupplungskennlinie neben dem Getriebeeingangsdrehmoment zusätzlich die Motordrehzahl und die Drehzahl der Getriebeeingangswelle in der eingangs beschriebenen Weise gemessen und ausgewertet werden. Demnach wird bei Drehzahlgleichheit davon ausgegangen, dass die Kupplung vollständig geschlossen ist und schlupffrei das von dem Antriebsmotor angebotene Drehmoment auf die Getriebeeingangswelle überträgt. Zudem kann vorgesehen sein, dass zusätzlich zu der o.g. Vorgehensweise der gemessene Wert des Kupplungsbetätigungsweges durch einen Vergleich von Motordrehzahl und Getriebeeingangswellendrehzahl plausibilisiert wird.

Wie erwähnt wird für die Steuerung und Reglung der Kupplung der Wert des Stellweges des Kupplungsaktuators benötigt. Dieser Stellwegwert wird in an sich bekannter Weise von einem Stellwegsensor an der Kupplung oder an dem Kupplungsaktuator zur Verfügung gestellt. Nun ist nicht auszuschließen, dass der Stellwegsensor defekt oder dessen Sensorleitung zu dem Getriebe-bzw. Kupplungssteuergerät unterbrochen ist.

Die Erfindung sieht daher vor, dass die mit Hilfe des an der Getriebeeingangswelle gemessenen Drehmoments zuvor exakt bestimmte Kupplungskennlinie auch zur ständigen Plausibilitätsüberprüfung des Stellwegsignals genutzt wird. Dazu wird der zu dem gemessenen Getriebeeingangsdrehmomentwert gehörige Kupplungsstellweg aus dem Kennfeld der Kupplungskennlinie aufgesucht und mit dem gemessenen Kupplungsstellweg verglichen. Sofern diese beiden Werte im Rahmen zulässiger Fehlergrenzen übereinstimmen, wird davon ausgegangen, dass der Stellwegsensor und die Sensorleitung in Ordnung sind. Wenn jedoch eine unzulässig hohe Abweichung festgestellt wird, kann eine diesbezügliche Fehlermeldung für den Fahrer und/oder Fahrzeugsteuergeräte erzeugt und ggf. angezeigt werden.

So wird beispielsweise ein Stellwegmesswert als nicht plausibel beurteilt, der eine vollständig geöffnete Kupplung signalisiert, wenngleich an der Getriebeeingangswelle ein Drehmoment gemessen wird. Auf diese Weise können Fehler im Kupplungsbetätigungssystem und zugeordneten Sensoren frühzeitig erkannt und diesbezügliche Notfallverfahren genutzt werden.

Bei einem anderen Störfall, bei dem beispielsweise die Tellerfeder der Kupplung teilweise gebrochen oder der Reibbelag der Kupplung verölt ist, führt dies ebenfalls zu Abweichungen zwischen der zuletzt gelernten Kupplungskennlinie und den gemessenen Werten für Küpplungsstellweg bzw. Getriebeeingangsdrehmoment. Konkret kann die Kupplung in einer solchen Situation nur ein reduziertes Drehmoment übertragen. Gemäß einer weiteren Variante der Erfindung kann daher vorgesehen sein, dass der Wert des Kupplungsbetätigungsweges mit Hilfe der einmal genau bestimmten Kupplungskennlinie durch einen Vergleich des an der Eingangsseite der Kupplung sowie an der Getriebeeingangswelle bestimmten Drehmoments plausibilisiert wird.

Außerdem wird es als vorteilhaft beurteilt, wenn in einer anderen Ausführungsform der Erfindung der Wert des Kupplungsbetätigungsweges sowie das Drehmoment an der Getriebeeingangswelle bestimmt wird, anschließend diese beiden Messwerte mit zugehörigen Werten der erlernten Kupplungskennlinie verglichen werden, und bei einem Überschreiten einer vorbestimmten Abweichung zwischen dem gemessenen Getriebeeingangsdrehmoment gegenüber dem aus der Kupplungskennlinie erwarteten Getriebeeingangsdrehmoment ein akustisches und/oder optisches Signal erzeugt wird, welches den Fahrer des Fahrzeugs auf eine Fehlfunktion im Antriebsstrang aufmerksam macht.

Des Weiteren kann gemäß der Erfindung dann, wenn bei einem gemessenen Kupplungsschließweg das gemessene Getriebeeingangsdrehmoment niedriger als der zu diesem Kupplungsschließweg gehörende Drehmomentwert der Kupplungskennlinie ist, auf einen mechanischen Schaden in der Kupplungsstellvorrichtung oder auf eine zu starke thermische Belastung durch unerlaubt hohe Differenzdrehzahlen zwischen dem Eingangselement und dem Ausgangselement der Kupplung geschlossen werden. In einem solchen Fall wird dies dem Fahrer als Fehlfunktion mitgeteilt sowie die Fahrzeugsicherheit erhaltende Maßnahmen eingeleitet.

Kupplungen haben bekanntermaßen die Eigenschaft, dass sich durch deren häufige Betätigung die Drehmomentübertragungsfähigkeit über den Kupplungsstellweg ändert, welches als Setzverhalten bezeichnet wird. Zudem ändert sich mit zunehmender Betriebsdauer der Kupplung auch die Anpresskraft der Tellerfeder der Kupplung in Abhängigkeit vom Verschleiß des Kupplungsbelages. Beide Effekte können über die Lebensdauer der Kupplung durch ständig wiederholte Lernvorgänge überwacht und bei den Kupplungsbetätigungsfunktionen berücksichtigt werden. Demnach sieht die Erfindung in einer weiteren Variante vor, dass das Kupplungsübertragungsdrehmoment in Abhängigkeit vom Betätigungsweg der Kupplung (Kupplungskennlinie) periodisch oder nicht periodisch neu erlernt wird.

Zur Überwachung der Einsatzbedingungen und/oder zur präventiven Verschleißerkennung der Kupplung wird die Reibleistung bzw. die Reibarbeit der Kupplung berechnet. Die Berechnungsergebnisse werden dazu genutzt, um den Fahrer bei einem Überschreiten von diesbezüglichen Grenzwerten zu informieren, um autonom Maßnahmen zum Schutz der Kupplung einzuleiten, um den Kupplungsverschleißzustand zu bestimmen und um die zu erwartende Kupplungslebensdauer zu prognostizieren. Gemäß einer weiteren Variante der Erfindung ist vorgesehen, dass zur Berechnung der vorgenannten Werte das an der Getriebeeingangswelle gemessene Getriebeeingangsdrehmoment genutzt wird. Durch diese Verfahrensmaßnahme lassen sich die erwähnten Werte sehr genau bestimmen, welches die Fahreigenschaften gegenüber anderen technischen Lösungen erkennbar verbessert.

Schließlich ist es Bestandteil der vorliegenden Erfindung, dass zur Überwachung der Einsatzbedingungen und/oder zur präventiven Verschleißkontrolle bzw. Schadenserkennung der Kupplung und/oder des Getriebes die von der Kupplung und/oder dem Getriebe übertragenen Drehmomente von dem Drehmomentsensor an der Getriebeeingangswelle erfasst werden, in vorbestimmte Drehmomentklassen klassifiziert und innerhalb dieser Klassen aufsummiert werden. Diese Drehmomentsummenwerte werden von einer Diagnosesoftware derart ausgewertet, dass beim Überschreiten von vorbestimmten Drehmomentsummenwerten bzw. Kupplungs- und/oder Getriebebelastungsgrenzen dem Fahrer diesbezügliche Verschleiß- und/oder Schadensmitteilungen übermittelt werden.

## Patentansprüche

1. Verfahren zum Betreiben einer automatisch betätigbaren Reibungskupplung in einem Kraftfahrzeugantriebsstrang, bei dem einer Eingangswelle eines Getriebes ein Drehmomentsensor zugeordnet ist, wobei zur Bestimmung einer Kupplungskennlinie der Reibungskupplung der Verlauf des gemessenen Getriebeeingangsdrehmomentes ermittelt und ausgewertet wird, **dadurch gekennzeichnet, dass** das Kupplungsübertragungsdrehmoment in Abhängigkeit vom Betätigungsweg der Kupplung, also in Abhängigkeit der Kupplungskennlinie, aus dem Verlauf des gemessenen Getriebeeingangsdrehmoments während eines Betätigungsvorgangs der Kupplung ermittelt wird und zur Bestimmung der Kupplungskennlinie zusätzlich die Motordrehzahl und die Drehzahl der Getriebeeingangswelle ausgewertet wird.

2. Verfahren nach Anspruch 1, **dadurch gekennzeichnet, dass** die Kupplungskennlinie während der Betätigung der Kupplung durch einen Vergleich der an der Eingangsseite der Kupplung sowie an der Getriebeeingangswelle gemessenen Drehmomentwerte ermittelt wird.

3. Verfahren nach Anspruch 1 oder 2, **dadurch gekennzeichnet, dass** der Wert des Kupplungsbetätigungsweges durch einen Vergleich von Motordrehzahl und Getriebeeingangswellendrehzahl plausibilisiert wird.

4. Verfahren nach Anspruch 1 oder 2, **dadurch gekennzeichnet, dass** der Wert des Kupptungsbetätigungsweges mit Hilfe der Kupplungskennlinie durch einen Vergleich des an der Eingangsseite der Kupplung sowie an der Getriebeeingangswelle bestimmten Drehmoments plausibilisiert wird.

5. Verfahren nach einem der Ansprüche 1 bis 4, **dadurch gekennzeichnet, dass** der Wert des Kupplungsbetätigungsweges sowie das Drehmoment an der Getriebeeingangswelle bestimmt wird, dass diese beiden Messwerte mit zugehörigen Werten der erlernten Kupplungskennlinie verglichen werden, und dass bei einem Überschreiten einer vorbestimmten Abweichung zwischen dem gemessenen Getriebeeingangsdrehmoment gegenüber dem aus der Kupplungskennlinie erwarteten Getriebeeingangsdrehmoment ein akustisches und/oder optisches Signal erzeugt wird, welches den Fahrer des Fahrzeugs auf eine Fehlfunktion im Antriebsstrang aufmerksam macht.

6. Verfahren nach wenigstens einem der vorherigen Ansprüche, **dadurch gekennzeichnet, dass** dann, wenn bei einem gemessenen Kupplungsschließweg das gemessene Getriebeeingangsdrehmoment niedriger als der zu diesem Kupplungsschließweg gehörende Drehmomentwert der Kupplungskennlinie ist, auf einen mechanischen Schaden in der Kupplungsstellvorrichtung oder auf eine zu starke thermische Belastung durch unerlaubt hohe Differenzdrehzahlen zwischen dem Eingangselement und dem Ausgangselement der Kupplung geschlossen wird, dass dies anschließend dem Fahrer als Fehlfunktion mitgeteilt wird und dass die Fahrzeugsicherheit erhaltende Maßnahmen eingeleitet werden.

7. Verfahren nach wenigstens einem der vorherigen Ansprüche, **dadurch gekennzeichnet, dass** das Kupplungsübertragungsdrehmoment in Abhängigkeit vom Betätigungsweg der Kupplung (Kupplungskennlinie) periodisch oder nicht periodisch neu erlernt wird.

8. Verfahren nach wenigstens einem der vorherigen Ansprüche, **dadurch gekennzeichnet, dass** die an der Getriebeeingangswelle gemessenen Drehmomentwerte in vorgegebenen Drehmomentgruppen klassifiziert und in diesen jeweils aufsummiert werden, dass diese Drehmomentsummenwerte von einer Diagnosesoftware ausgewertet werden, und dass bei einem Überschreiten von vorbestimmten Drehmomentsummen bzw. Kupplungsbelastungsgrenzen und/oder Getriebebelastungsgrenzen dem Fahrer diesbezügliche Verschleiß- und/oder Schadensmitteilungen übermittelt werden.

## Claims

1. Method for operating an automatically actuable friction clutch in a motor vehicle drivetrain, in which a torque sensor is assigned to the input shaft of a gearbox, wherein the profile of the measured gearbox input torque is determined and evaluated in order to determine a clutch characteristic curve of the friction clutch, **characterized in that** the clutch transmission torque is determined as a function of the actuating travel of the clutch, that is to say as a function of the clutch characteristic curve, from the profile of the measured gearbox input torque during an actuating process of the clutch, and the engine rotational speed and the rotational speed of the gearbox input shaft are additionally evaluated in order to determine the clutch characteristic curve.

2. Method according to Claim 1, **characterized in that** the clutch characteristic curve is determined during the actuation of the clutch by a comparison of the torque values measured at the input side of the clutch and at the gearbox input shaft.

3. Method according to Claim 1 or 2, **characterized in that** the value of the clutch actuating travel is checked for plausibility by a comparison of engine rotational speed and gearbox input shaft rotational speed.

4. Method according to Claim 1 or 2, **characterized in that** the value of the clutch actuating travel by means of the clutch characteristic curve is checked for plausibility by a comparison of the torque determined at the input side of the clutch and at the gearbox input shaft.

5. Method according to one of Claims 1 to 4, **characterized in that** the value of the clutch actuating travel and the torque at the transmission input shaft are determined, **in that** said two measured values are compared with associated values of the learned clutch characteristic curve, and **in that** if a predetermined deviation between the measured gearbox input torque and the gearbox input torque expected from the clutch characteristic curve is exceeded, an audible and/or visible signal is generated which notifies the driver of the vehicle of a malfunction in the drivetrain.

6. Method according to at least one of the preceding claims, **characterized in that** if, at a measured clutch closing travel, the measured gearbox input torque is lower than the torque value assigned to said clutch closing travel on the clutch characteristic curve, it is concluded that there is mechanical damage in the clutch actuating device or excessive thermal loading as a result of inadmissibly high rotational speed differences between the input element and the output element of the clutch, **in that** this is subsequently communicated to the driver as a malfunction, and **in that** measures for maintaining vehicle safety are initiated.

7. Method according to at least one of the preceding claims, **characterized in that** the clutch transmission torque is newly learned periodically or aperiodically as a function of the actuating travel of the clutch (clutch characteristic curve).

8. Method according to at least one of the preceding claims, **characterized in that** the torque values measured at the gearbox input shaft are sorted into predefined torque groups and are added up in each case in said groups, **in that** said torque sum values are evaluated by diagnostic software, and **in that** in the event of an exceedance of predetermined torque sums or clutch loading limits and/or gearbox loading limits, wear and/or damage messages in this respect are communicated to the driver.

## Revendications

1. Procédé pour faire fonctionner un embrayage à friction à commande automatisée dans une chaîne cinématique d'un véhicule automobile, dans lequel on associe à un arbre d'entrée d'une transmission un capteur de couple, et pour la détermination d'une courbe caractéristique d'embrayage de l'embrayage à friction, on détermine et analyse l'allure du couple d'entrée mesuré de la transmission, **caractérisé en ce que** le couple de transfert d'embrayage est déterminé en fonction de la course d'actionnement de l'embrayage, c'est-à-dire en fonction de la courbe caractéristique d'embrayage, à partir de l'allure du couple d'entrée mesuré de la transmission pendant une opération d'actionnement de l'embrayage, et pour déterminer la courbe caractéristique d'embrayage, le régime du moteur et la vitesse de rotation de l'arbre d'entrée de la transmission sont en outre analysés.

2. Procédé selon la revendication 1, **caractérisé en ce que** la courbe caractéristique d'embrayage est déterminée pendant l'actionnement de l'embrayage par une comparaison des valeurs de couple mesurées du côté de l'entrée de l'embrayage et au niveau de l'arbre d'entrée de la transmission.

3. Procédé selon la revendication 1 ou 2, **caractérisé en ce que** la valeur de la course d'actionnement de l'embrayage est soumise à une analyse de plausibilité par une comparaison du régime du moteur et de la vitesse de rotation de l'arbre d'entrée de la transmission.

4. Procédé selon la revendication 1 ou 2, **caractérisé en ce que** la valeur de la course d'actionnement de l'embrayage est soumise à une analyse de plausibilité à l'aide de la courbe caractéristique d'embrayage par une comparaison du couple déterminé du côté de l'entrée de l'embrayage et aussi au niveau de l'arbre d'entrée de la transmission.

5. Procédé selon l'une quelconque des revendications 1 à 4, **caractérisé en ce que** la valeur de la course d'actionnement de l'embrayage, ainsi que le couple au niveau de l'arbre d'entrée de la transmission, sont déterminés, **en ce que** ces deux valeurs de mesure sont comparées avec des valeurs associées de la courbe caractéristique d'embrayage apprise, et **en ce que** dans le cas d'un dépassement d'un écart prédéterminé entre le couple d'entrée mesuré de la transmission et le couple d'entrée de la transmission attendu d'après la courbe caractéristique d'embrayage, un signal acoustique et/ou optique est généré, lequel avertit le conducteur du véhicule d'une panne de fonctionnement dans la chaîne cinématique.

6. Procédé selon au moins l'une quelconque des revendications précédentes, **caractérisé en ce que** lorsque dans le cas d'une course de fermeture d'embrayage mesurée, le couple d'entrée mesuré de la transmission est plus faible que la valeur de couple de la courbe caractéristique d'embrayage correspondant à cette course de fermeture d'embrayage, on en conclut à un endommagement mécanique dans le dispositif de réglage de l'embrayage ou à une contrainte thermique excessive due à des régimes différentiels trop élevés entre l'élément d'entrée et l'élément de sortie de l'embrayage, **en ce que** ceci est ensuite communiqué au conducteur sous forme de fonction d'erreur, et **en ce que** des mesures préservant la sécurité du véhicule sont introduites.

7. Procédé selon au moins l'une quelconque des revendications précédentes, **caractérisé en ce que** le couple de transfert d'embrayage est appris à nouveau de manière périodique ou non périodique en fonction de la course d'actionnement de l'embrayage (courbe caractéristique d'embrayage).

8. Procédé selon au moins l'une quelconque des revendications précédentes, **caractérisé en ce que** les valeurs de couple mesurées au niveau de l'arbre d'entrée de la transmission sont classées en groupes de couple prédéfinis et sont à chaque fois additionnées dans ces groupes, **en ce que** ces valeurs de sommes de couples sont analysées par un logiciel de diagnostic et **en ce que** dans le cas d'un dépassement des sommes de couples prédéterminées ou des limites de contraintes d'embrayage et/ou des limites de contrainte de la transmission, des informations d'usure et/ou d'endommagement associées sont communiquées au conducteur.
